# EUROPEAN PATENT APPLICATION

(11) **EP 2 012 487 A2**
(43) Date of publication of application: **07.01.2009**
(21) Application number: 08165016.0
(22) Date of filing: 01.02.2006
(51) Int. Cl.: H04L 27/26, H04L 1/00

(54) **Broadcast interference elimination in OFDM receiving systems**

(30) Priority: 03.02.2005 JP 2005027563
(62) Divisional of application: 06002084.9
(71) Applicant: Panasonic Corporation, Kadoma-shi Osaka 571-8501 (JP)
(72) Inventor: Kisoda, Akira, c/o Matsushita Electric Industrial Co., Ltd., Chuo-ku Aichi 540-6207 (JP)
(74) Representative: Grünecker, Kinkeldey, Stockmair & Schwanhäusser Anwaltssozietät

(57) **Abstract**

A receiver that receives an orthogonal frequency division multiplex signal on which a plurality of carriers that carry data are multiplexed, the receiver comprises: a first average calculation unit operable to, calculate an average power that is an average in a symbol direction of the reception power calculated for each carrier, a second average calculation unit operable to calculate an average power of all carriers that is an average in a frequency direction of the average powers calculated for each carrier by the first average calculation unit, a threshold generation unit operable to generate a threshold value based on the average power of all carriers calculated by the second average calculation unit, and, an interference detection unit operable to, for each carrier, compare the average power of the carrier calculated by the first average calculation unit with the threshold value, and when the average power of the carrier is greater than the threshold value, detect the carrier as a carrier that is receiving interference.

## Description

### BACKGROUND OF THE INVENTION

### (1) Field of the Invention

The present invention relates to a technique for eliminating interference when receiving an OFDM signal.

### (2) Description of the Related Art

After commencement in recent years, digital terrestrial broadcasting is gradually becoming available in more areas. In digital terrestrial broadcasting, OFDM (Orthogonal Frequency Division Multiplexing) is used, and fixed reception can be maintained even if interference occurs by applying error correction processing in the device at the receiver side. However, when interference exceeds a certain threshold, the receiving condition deteriorates sharply, and problems occur such as block noise, which is defects in parts of the image, and interruptions in video and audio.

Causes of deterioration of signal quality in digital terrestrial broadcasting include delayed waves of the broadcast itself caused by multipath or the like, analog television broadcast waves, and external interference such as EMI (electromagnetic interference) radiation. In particular, during the period of simultaneous digital and analog broadcasting that uses the same frequency band, digital broadcasting waves are susceptible to interference from analog broadcasting waves. This kind of interference caused by analog broadcasting that uses the same frequency band as digital broadcasting is called "co-channel interference" in this patent application.

One technique for detecting and eliminating this interference is disclosed by Reference 1 for specifying carrier waves affected by interference. In addition, Reference 2 discloses an OFDM diversity reception apparatus that includes two reception systems, each of which uses a variance to judge the strength of interference received by each carrier, and the OFDM diversity reception apparatus selectively uses the one of the signals that has received less interference so as to avoid the effects of interference.

Furthermore, Reference 3 discloses an OFDM reception apparatus that, based on pilot signals, detects frequency selective interference (co-channel interference in this document), and performs error correction by subjecting the data of the carriers that are being affected by frequency selective interference to loss processing.

With the technique of Reference 3, when frequency selective interference is detected, carriers that are thought to be affected by the interference are all removed. However, a video signal of an analog broadcasting wave has discrete peaks where the power is a local maximum. OFDM carriers of frequencies in the vicinity of the peaks are greatlyaffectedby the video signal, while carriers of frequencies between the peaks are relatively unaffected. Furthermore, according to the broadcast station, the analog broadcasting waves may be set to have an offset of either +10 kHz or -10 kHz, or not have an offset. Therefore, if the method of Reference 3 is used to eliminate all carriers that are being affected by co-channel interference regardless of frequency characteristics of the analog broadcasting and whether or not an offset is provided, data of carriers that are not actually affected, or are only slightly affected, by the analog broadcasting will be removed, causing lower reception performance. This drop in reception performance is particularly significant in cases in which the encoding rate of convolutional code is high.

References:
Reference 1: Japanese Patent Application Publication No. 2004-120789
Reference 2: Japanese Patent No. 3389178
Reference 3: Japanese Patent No. 3363086

### SUMMARY OF THE INVENTION

In order to solve the stated problem, the present invention has an object of providing a receiver and a receiving method capable of eliminating interference caused by analog broadcasting, while maintaining reception performance.

In order to solve the stated problem, the present invention is a receiver that receives an orthogonal frequency division multiplex signal on which a plurality of carriers that carry data are multiplexed, the receiver including: a determination unitoperableto, with respect to each carrier, compare a received power of the carrier with a threshold value, and determine whether or not the received power is greater than the threshold value; a specification unit operable to specify a main peak carrier that has a local maximum received power among one or more carriers whose received power was determined to be greater than the threshold value; and a setting unit operable to set, for the main peak carrier, a main peak reliability level that shows an accuracy of a signal carried by the main peak carrier, and to set, for each of carriers in a vicinity of the main peak carrier, a reliability level that is equal to or higher than the main peak reliability level, in accordance with a difference between a frequency of the main peak carrier and a frequency of the carrier in the vicinity of the main peak carrier.

Since the main peak carrier is the carrier that has a local maximum received power, the main peak carrier is the carrier having the frequency closest to the frequency of the interference, and is being strongly affected by the interference. However, the greater the difference in frequency with the main peak carrier, the less carriers in the vicinity of the main peak carrier are affected by the interference. With the stated structure, the setting unit sets, for each carrier in the vicinity of the main peak carrier, a reliability level that is equal to or higher than the main peak reliability level, in accordance with the difference between the frequency of the main peak carrier and thefrequencyofthecarrier. Therefore, alowreliability level can be set for carriers that are strongly affected by the interference, and a high reliability level can be set for carriers that are not significantly affected by the interference.

Weighting the signal carried by each carrier and restoring the data in accordance with the reliability information set for each carrier ensures that the effects of interference can be reliably eliminated while also preventing a drop in reception performance.

Here, the receiver may further include: a prediction specification unit operable to, when the orthogonal frequency division multiplex signal is receiving interference from an analog television broadcast wave that uses a same frequency band as the orthogonal frequency division multiplex signal, specify a predicted carrier that is a predetermined frequency from the main peak carrier, wherein the setting unit further sets, for the predicted carrier, a predicted carrier reliability level that is equal to or higher than the main peak carrier reliability level, and sets, foreachof carriers inavicinityof the predicted carrier, a reliability level that is equal to or higher than the predicted carrier reliability level, in accordance with a difference between a frequency of the predicted carrier and a frequency of the carrier in the vicinity of the predicted carrier.

The frequency characteristics of an analog television broadcast wave are such that the power has a local maximum value at discrete locations. The positional relationship of the frequency of the local maximum values of the power and the size correlation between the local maximum values are approximately fixed. With the stated structure, the prediction specification unit specifies a predicted carrier that is a predetermined frequency from the main peak carrier, and the setting unit sets a reliability level for the predicted carrier that is equal to or higher than the main peak reliability level. Therefore, reliability levels can be set that reflect characteristics of the analog broadcasting wave, in other words, the position of the frequency of each local maximum value and the size correlation between the local maximum values.

Furthermore, for each carrier in the vicinity of the predicted carrier, the setting unit sets a reliability level that is equal to or greater than the predicted carrier reliability level, in accordance with the difference in frequency between the predicted carrier and the carrier. This means that appropriate reliability levels can also be set for carriers in the vicinity of the peaks of the analog broadcasting wave.

Here, the specification unit may specify the main peak carrier from among carriers in a frequency vicinity of a video signal of the analog television broadcast wave, and attempt to specify, from among carriers in a frequency vicinity of an audio signal of the analog television broadcast wave, a sub-peak carrier that has a local maximum received power among the one or more carriers whose received power was determined by the determination unit to be equal to or greater than the threshold value, and the prediction specification unit may specify the predicted carrier if the specification unit has specified the sub-peak carrier.

The respective frequencies over which the video signal and the audio signal of the analog television broadcast wave are distributed are determined in the Standard (a ±10 kHz offset may be provided, however). Therefore, if the main peak carrier is specified in a frequency vicinity of the video signal of the analog television broadcast wave and the sub-peak carrier is specified in the vicinity of the audio signal of the analog television broadcast wave, it is highly likely that co-channel interference is occurring in the orthogonal frequency division multiplex signal. With the stated structure, the prediction specification unit specifies the prediction carrier if the main peak carrier has been specified in a frequency vicinity of the video signal of the analog television broadcast wave and the sub-peak carrier has been specified in the vicinity of the audio signal of the analog television broadcast wave. This enables the setting unit to set reliability levels highly accurately in accordance with the co-channel interference.

Here, the predetermined frequency may be a multiple of a horizontal synchronization frequency of the analog television broadcastwave, and the prediction specification unit may specify a carrier whose frequency from the main peak carrier is a multiple of the horizontal synchronization frequency, as the predicted carrier.

The video signal of the analog television wave has a steep peak every multiple of the horizontal synchronization frequency. The stated structure assures that the setting unit is able to set a low reliability level for carriers that are being strongly affected by the video signal of the analog broadcasting.

Here, the predetermined frequency may be a difference between a frequency of the audio signal of the analog television broadcast wave and a frequency of the video signal of the analog television broadcast wave, and the prediction specification unit may specify a carrier whose frequency from the main peak carrier is equal to the difference between the frequency of the audio signal and the frequency of the video signal, as the prediction peak carrier.

The interval between the frequency of the video signal and the frequency of the audio signal of an analog television broadcast wave is determined in the Standard. Therefore, the stated structure assures that the setting unit sets a low reliability level for carriers that are being strongly affected by the audio signal of the analog broadcasting.

Here, the prediction unit may specify the predicted carrier if the carrier specified as the main peak carrier is, in terms of frequency, in a vicinity of a video signal of the analog television broadcast wave.

The power of the audio signal of the analog television broadcast wave is low compared to the power of the video signal of the analog television broadcast wave, and therefore even if co-channel interference is occurring, if the level of interference in low, the audio signal will affect the frequency characteristics of the orthogonal frequency division signal only slightly. With the stated structure, the prediction specification unit specifies the predicted carrier if the main peak carrier is specified in a frequency vicinity of the video signal of the analog television broadcast wave and the sub-peak carrier is specified in the vicinity of the audio signal of the analog television broadcast wave. This means that the receiver of the present invention is able to set a low reliability level for the carriers that are expected to be affected by the analog television broadcast.

The stated structure also enables the prediction specification unit to have a simple circuit structure.

Here, the specification unit may specify the main peak carrier from among carriers that are, in terms of frequency, in a vicinity of a video signal of the analog television broadcast wave, and attempt to specify, from among carriers whose received power has been determined to be equal to or greater than the threshold value, a sub-peak carrier that has a local maximum received power and whose frequency differs from the frequency of the main peak carrier by a frequency that is a multiple of a horizontal synchronization frequency of the analog television broadcastwave, and the prediction specification unit may specify the predicted carrier if the specification unit has specified the sub-peak carrier.

The power of the video signal of the analog television broadcast wave is highly concentrated in multiples of the horizontal synchronization frequency, and there are steep peaks where the power is concentrated. Therefore, if the main peak carrier exists a frequency vicinity of the video signal of the analog television broadcast wave and a sub-peak carrier exists whose difference from the frequency of the main peak carrier is a frequency that is a multiple of the horizontal synchronization frequency of the analog television broadcast wave, it is highly likely that co-channel interference is occurring. With the stated structure, the prediction carrier is specified if the main peak carrier exists in a frequency vicinity of the video signal of the analog television broadcast wave and the sub-peak carrier exists whose difference from the frequency of the main peak carrier is a frequency that is a multiple of the horizontal synchronization frequency of the analog television broadcast wave. This means that the receiver of the present invention is able to set reliability levels that are appropriate to the co-channel interference.

Here, the determination unit may include: a threshold calculation sub-unit operable to, for each carrier, calculate a threshold value corresponding to the carrier, based on an average value of received power of the carrier and a predetermined number of carriers in a vicinity of the carrier; and a determination sub-unit operable to, for each carrier, compare received power of the carrier with the threshold value corresponding to the carrier, and determine whether or not the received power of the carrier is greater than the corresponding threshold value.

Ordinarily, if carriers being affected by interference are excluded, the distribution of power an orthogonal frequency division signal with respect to frequency is flat. However, if the signal is affected on the transmission path, the distribution of the power of the orthogonal frequency division signal may slant, and therefore there is a danger that if the determination as to whether the carriers are being affected is made using the same threshold value for each carrier, the setting unit will set a low reliability level for carriers that are not being affected by interference.

With the stated structure, the threshold calculation unit calculates an appropriate threshold value for each carrier based on an average value of the received power of the carrier and a predetermined number of carriers in the vicinity of the carrier. This prevents erroneous reliability levels from being set.

Here, the determination unit may include: a power calculation sub-unit operable to calculate a power of each carrier each symbol period; an accumulation sub-unit operable to, for each carrier, accumulate the power of the carrier over a predetermined number of symbol periods, to calculate the received power of each carrier; and a determination sub-unit operable to, for each carrier, compare the received power of the carrier with a threshold value, and determine whether or not the received power is greater than the threshold value.

With the stated structure, the received power of each carrier is generated by adding the power of the carrier over a predetermined number of symbol periods. Therefore, the determination unit is able to make determinations stably, regardless of temporary changes in the reception state such as instantaneous effects of interference and defects in reception of waves in mobile communication.

### BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:
FIGs. 1A and 1B show frequency characteristics of digital terrestrial broadcasting and an analog television broadcast in Japan;
FIGs. 2A to2C show frequency characteristics of digital terrestrial broadcasting and analog broadcasting that use a same channel, and in particular show the frequency band over which a video signal of the analog television broadcast is distributed;
FIGs. 3A and 3B show frequency characteristics of digital terrestrial broadcasting and analog broadcasting that use a same channel, and in particular show the frequency band over which an audio signal of the analog television broadcast is distributed;
FIG. 4 shows in-band interference that occurs in digital terrestrial broadcasting;
FIG. 5 is a block diagram showing the structure of a receiver 100 of a first embodiment;
FIG. 6 shows an example of a structure of a memory 116;
FIG. 7 shows details of a carrier determination table 140 stored in an interference determination unit 119;
FIG. 8 shows an example of distribution of average power of carriers of an OFDM signal received by the receiver 100, with respect to carriers having carrier numbers 867 to 933 in particular;
FIG. 9 shows an example of distribution of average power of carriers of the OFDM signal received by the receiver 100, with respect to carriers having carrier numbers 5403 to 5469 in particular;
FIG. 10 shows the correlation between carrier numbers of the carriers and reliability information in a first correspondence table stored in a reliability output unit 121;
FIG. 11 shows the correlation between carrier numbers of the carriers and reliability information in a second correspondence table stored in the reliability output unit 121;
FIG. 12 is a flowchart showing operations by a power calculation unit 112, an average calculation unit 113, a threshold calculation unit 118, the interference determination unit 119, and the reliability output unit 121 for setting reliability information;
FIG. 13 is a flowchart showing operations for setting reliability information, and is a continuation of FIG. 12;
FIG. 14 is a flowchart showing operations for setting reliability information, and is a continuation of FIG. 12;
FIG. 15 is a block diagram showing the structure of the receiver 200 of a second embodiment;
FIG. 16 is a block diagram showing the structure of an equalization processing unit 207; and
FIGs. 17A and 17B show frequency characteristics of an OFDM signal that is being affected by multipath interference, and reliability information set for the carriers.

### DESCRIPTION OF THE PREFERRED EMBODIMENTS

### 1. First Embodiment

The following describes a first embodiment of the present invention with use of the drawings.

### 1.1 Co-channel interference

To assist with comprehension of the present invention, a description is given of interference that occurs in digital terrestrial broadcasting.

### (1) Frequency characteristics

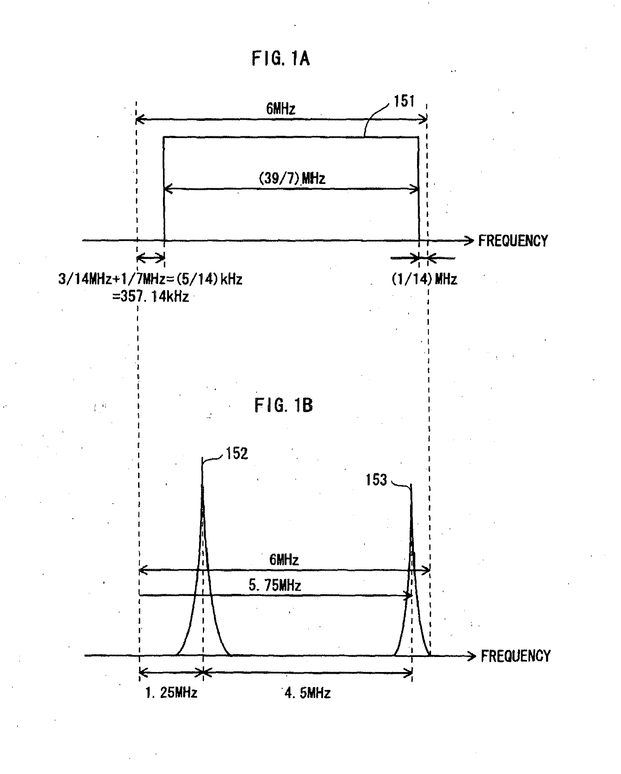

FIG. 1A shows schematically the frequency characteristics of a broadcast wave in digital terrestrial broadcasting in Japan. In the first embodiment, the description is given basedon digital terrestrial broadcasting that complies with ISDB-T (Integrated Services Digital Broadcasting- Terrestrial) Mode 3. Since ISDB-T is commonly known, a detailed description thereof is omitted here.

As shown in FIG. 1A, a 6-MHz frequency band is allocated to each digital terrestrial broadcasting channel, and the 6-MHz band is divided into 14 segments of which 13 are actually used for carrying. Since a 1/7-MHz offset is set in order to avoid effects of the audio signal of an analog broadcasting wave that uses a neighboring band, in digital terrestrial broadcasting the carrier of the lowest frequency in the OFDM signal (carrier number "0") exists at a position 5/14 MHz (=357.14 kHz) from the bottom of the channel, and the carrier signal of the highest frequency in the OFDM signal (carrier number "5616") exists at a position 1/14 MHz from the top of the channel. In Mode 3, the interval between OFDM carriers is stipulated at 0.992063 kHz, and 5617 carriers exist in each one channel. The OFDM carriers have substantially equal power, and, as shown in FIG. 1A, an OFDM signal 151 of digital terrestrial broadcasting is flat.

FIG. 1B shows schematically the frequency characteristics of analog broadcasting in Japan (NTSC (National Television Standard Committee)). As shown in FIG. 1B, a 6-MHz frequency band is allocated to each channel in analog broadcasting. A video signal 152 is distributed centered around a position that is 1.25 MHz from the bottom of the 6-MHz frequency band, and an audio signal 153 is distributed centered around a position that is 5.75 MHz from the bottom of the 6-MHz frequency band. The interval between the peak of the video signal 152 and the peak of the audio signal 153 is approximately 4.5 MHz. However, as noted earlier an offset of ±10kHz may provided in analog broadcasting according to the broadcast station. Generally, the video signal has a greater power intensity than the audio signal.

### (2) Co-channel interference

Since digital terrestrial broadcasting uses the UHF band (440 MHz to 770 MHz), there are cases in which signals of digital terrestrial broadcasting and analog broadcastinginterfere with each other on that same channel, causing co-channel interference.

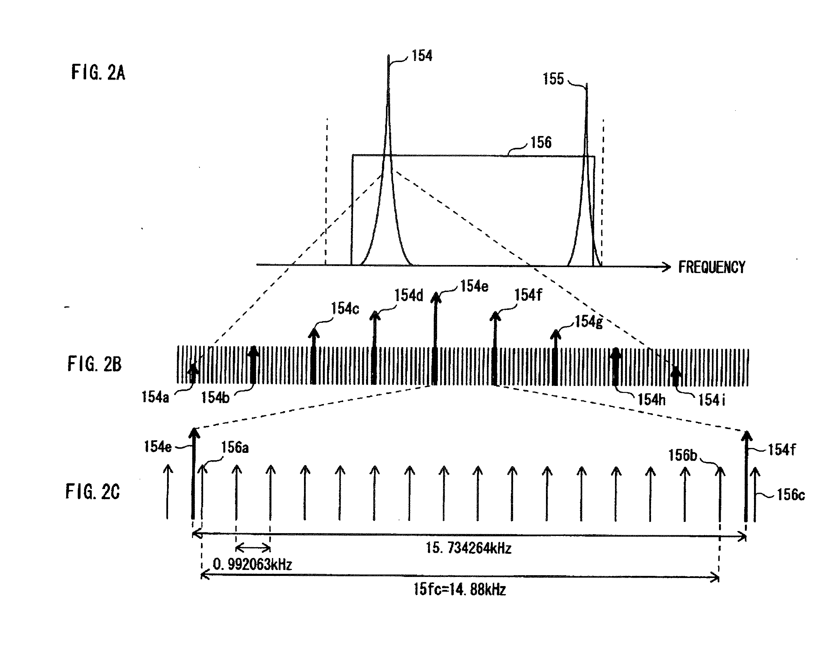

FIG. 2A shows frequency characteristics of analog broadcasting and digital terrestrial broadcasting that use the same channel. The frequency bands in which an OFDM signal 156 of digital terrestrial broadcasting and a video signal 154 and an audio signal 155 of analog broadcasting exist overlap with each other.

FIG. 2B is an enlarged view of the frequency at which the video signal 154 of FIG. 2A peaks, and the vicinity thereof. Each of the thick arrows in the drawing expresses a peak of the analog broadcasting video signal, and each of the thin vertical lines expresses a carrier of an OFDM signal.

Since the point force of the analog broadcasting video signal is focused in positions that are multiples of the horizontal synchronization frequency of the analog signal (15.734264 kHz), as shown in FIG. 2B, the video signal has steep peaks 154a to 154i at equal intervals, and the interval between each neighboring peaks is 15.734264 kHz.

FIG. 2C is an exploded view of the part of the signals between the peaks 154e and 154f of FIG. 2B. Each of the narrow arrows parallel with the peaks 154e and 154f in the drawing expresses a carrier of the OFDM signal. As described above, the interval between the peak 154e and the peak 154f is 15.734264 kHz, and the carrier interval in the OFDM signal is 0.992063 kHz. Since 15.734264/0.992063 = 15.86..., approximately 16 carriers of the OFDM signal exist between each two peaks of the analog broadcasting audio signal.

When co-channel interference is occurring, the carriers in the vicinity of the peaks of the analog broadcasting video signal are strongly affected by the video signal, while other carriers are not significantly affected. For instance, when OFDM carriers exist in the positions shown in FIG. 2C, the carriers in the vicinity of the peak 154e and the peak 154f are most affected by the video signal. The carriers 156a and 156c, which are the carriers that are closest in frequency to the peaks 154e and 154f, are particularly strongly affected, while the carriers that are midway between peaks 154e and 154f are less likely to be affected.

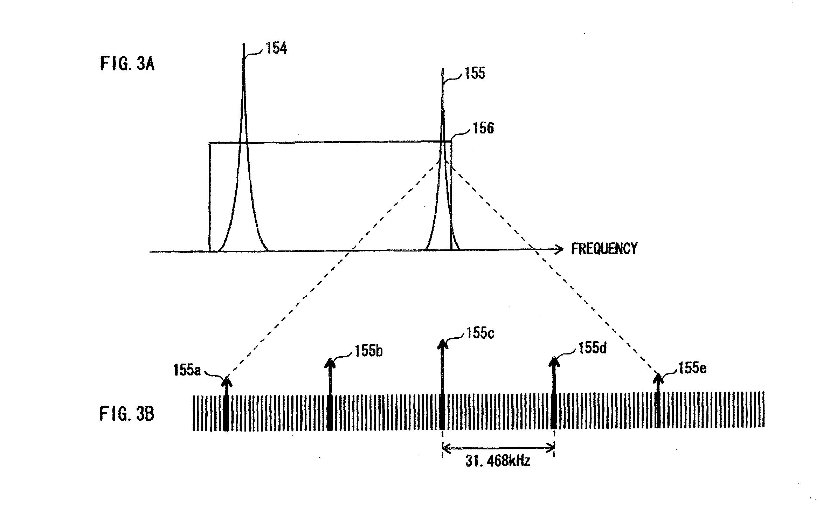

On the other hand, as shown in FIGs. 3A and 3B, the audio signal 155 of the analog broadcasting has peaks 155a to 155e where the power is concentrated at intervals of twice the horizontal synchronization frequency (i.e. intervals of 31.486 Hz). Since 31.468/0.992063 = 31.719..., approximately 32 OFDM carriers exist between neighboring peaks.

However, unlike the video signal, the peaks of the audio signal are not so sharp, and with the greatest peak 155c having the greatest power as the highest point overall, the power of the video signal drops the further away the peak 155c is. Consequently, the closer a carrier is in frequency to the peak 155c, the more it is affected by the audio signal, and the further away a carrier is from the peak 155c, the less it is affected by the audio signal.

Assuming that there is no offset in the analog broadcasting, the greatest peak 154e of the analog broadcasting audio signal 154 exists in a position that is 892.86 kHz (= 1.25 MHz - 357.14 kHz) from the position of bottom OFDM carrier. Since 892.86 kHz/0.9920 63 kHz=900.0033..., the carrier number of the carrier 156a that exists at the frequency closest to the peak 154e is 900. Note that fluctuation in frequency due to movement of the receiver or the like is not touched on here.

Furthermore, since the interval between the video signal 154 and the audio signal 155 is 4.5 MHz, approximately 4536 carriers exist between the greatest peak 154e of the video signal 154 and the greatest peak 155c of the audio signal 155 (4536 = 4.5 MHz/ 0.992063 kHz), and the carrier number of the carrier closest in frequency to the peak 155c of the audio signal 155 is 5436.

### (3) In-band interference

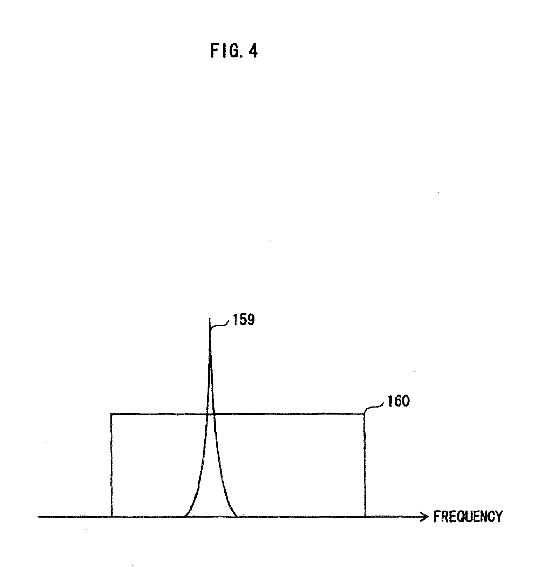

Digital terrestrial broadcasting may receive interference due to various factors besides analog broadcasting that uses the same channel, examples of such factors being EMI radiation from peripheral devices or natural phenomena such as lightening during transmission. Such interference is called in-band interference hereinafter. FIG. 4 shows an OFDM signal 160 of digital terrestrial broadcasting and in-band interference 159 that is occurring in the frequency band of the digital terrestrial broadcasting. The frequency of the in-band interference 159 is often difficult to predict.

### 1.2 Structure of receiver 100

The following describes the structure of a receiver 100 of the first embodiment.

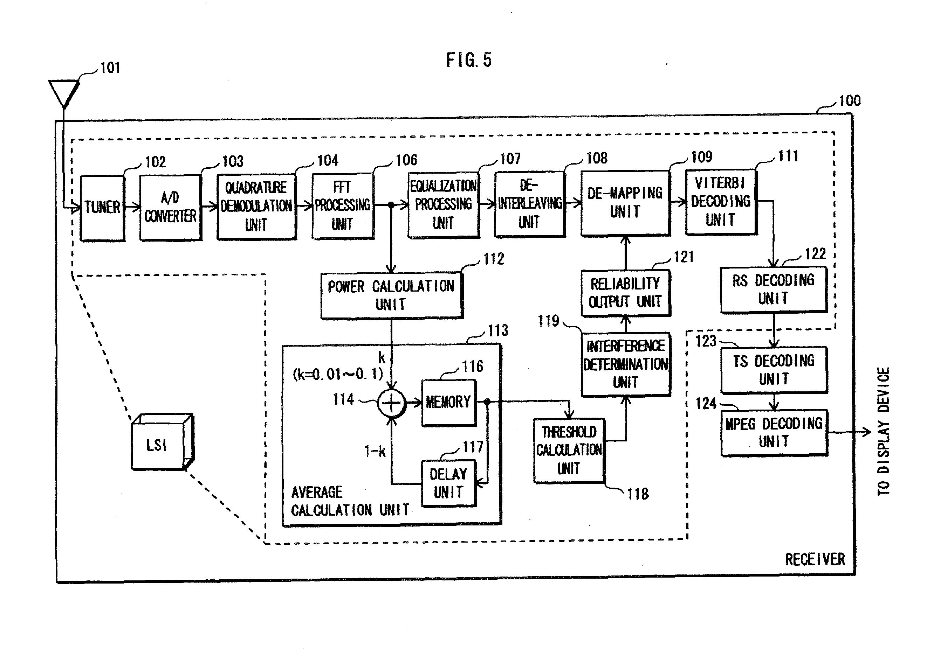

The receiver 100 has a function of receiving digital terrestrial broadcasting services that comply with ISDB-T Mode 3. The receiver 100 is connected to a display device such as an LCD television, and, as shown in FIG. 5, is composed of an antenna 101, a tuner 102, an A/D converter 103, a quadrature demodulation unit 104, an FFT processing unit 106, an equalization processing unit 107, a de-interleaving unit 108, a de-mapping unit 109, a Viterbi decoding unit 111, a power calculation unit 112, an average calculation unit 113, a threshold calculation unit 118, an interference determination unit 119, a reliability output unit 121, an RS decoding unit 122, a TS decoding unit 123, and an MPEG decoding unit 124.

The tuner 102, the A/D converter 103, the quadrature demodulation unit 104, the FFT processing unit 106, the equalization processing unit 107, the de-interleaving unit 108, the de-mapping unit 109, the Viterbi decoding unit 111, the power calculation unit 112, the average calculation unit 113, the threshold calculation unit 118, the interference determination unit 119, the reliability output unit 121 and the RS decoding unit 122 are circuits formed on a same one LSI (large scale integration).

The following describes each of the compositional elements of the receiver 100.

### (1) Antenna 101 and tuner 102

The tuner 102 tunes a frequency band relating to a predetermined channel from a signal received by the antenna 101, and outputs the resultant signal to the A/D converter 103.

### (2) A/D converter 103 and quadrature demodulation unit 104

The A/D converter 103 samples the OFDM signal from the tuner 102, converts the analog OFDM signal to a digital signal, and outputs the digital signal to the quadrature demodulation unit 104.

The quadrature demodulation unit 104 multiplies the carrier wave OFDM signal with a sine wave that has the same frequency as a reference carrier wave, and removes high frequency components, thereby generating a sample value series of an OFDM baseband signal. The quadrature demodulation unit 104 outputs the generated sample value series to the FFT processing unit 106.

### (3) FFT processing unit 106

The FFT processing unit 106 extracts the effective symbol period from the OFDM baseband signal (including the guard interval) output by the quadrature demodulation unit 104. The FFT processing unit 106 converts the extracted time domain sample to a frequency domain sample, to generate complex signals for each carrier. The complex signal group relating to one effective symbol generated in this way is called an OFDM symbol. The FFT processing unit 106 outputs the generated OFDM symbol to the equalization processing unit 107 and the output calculation unit 112.

### (4) Equalization processing unit 107

An OFDM signal in digital terrestrial broadcasting has an SP signal (scattered pilot signal) every 12 carriers in the carrier direction. SP signals are shifted three carriers in the carrier direction every symbol period. The equalization processing unit 107 receives the OFDM symbol from the FFT processing unit 106, detects the SP signals in the received OFDM symbol, and using the detected SP signals, compensates for distortion on the transmission path.

### (5) De-interleaving unit 108

The de-interleaving unit 108 receives OFDM symbols for which compensation was performed by the equalization processing unit 107, and subjects the received OFDM symbol to time de-interleaving and frequency de-interleaving. The de-interleave unit 108 then converts the parallel complex signals into serial signals, and outputs the serial signals to the de-mapping unit 109.

### (6) Power calculation unit 112

The power calculation unit 112 receives the OFDM symbol from the FFT processing unit 106, and calculates the power of each carrier over one effective symbol. For convenience of explanation, p(m,s) denotes the power of a carrier in the OFDM symbol number m and carrier number s (0 ≤ s ≤ 5616). The power calculation unit 112 then outputs the calculated power p(m,s) of each carrier to the average calculation unit 113.

### (7) Average calculation unit 113

The average calculation unit 113 is composed of an adding unit 114, a memory 116 and a delay unit 117, and has a function of calculating the average power of each carrier up to the present.

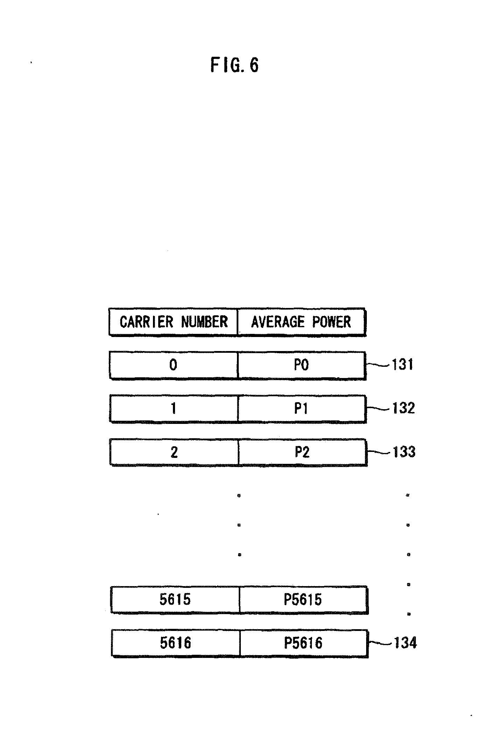

The memory 116 has a function of storing the average power in the symbol direction up to the present time. FIG. 6 shows an example of a structure of the memory 116.

As shown in FIG. 6, the memory 116 has 5617 memory areas, i.e. 131, 132, 133,...134. Each memory area stores a carrier number (0 to 5616) and an average power (P0 to P5616). Each average power is an average, in the symbol direction, of the power of the carrier shown by the corresponding carrier number.

As one example, a carrier number "0" and an average power "P0" are stored in the storage area 131, and, assuming that this average power "P0" is an average power after p(m,0) has been output by the power calculation unit 112, "P0" is the average value of p(0,0), p(1,0),...p(m,0).

The adding unit 114 successively receives the power of each carrier from the power calculation unit 112. If the power received by the adding unit 114 is p(m,s), the delay unit 117 reads the average power "Ps" that corresponds to the carrier number "s" from the memory 116, and outputs the average power "Ps" to the adding unit 114. The adding unit 114 calculates k×p(m,s) + (1-k) × Ps, and, in accordance with the calculation result, updates the average power stored in the memory 116 in correspondence with the carrier number "s". Here, "k" is a variable that varies between 0.001 and 0.1.

The described average calculation unit 113 can be implemented using an IIR filter.

### (8) Threshold calculation unit 118

The threshold calculation unit 118 reads the average powers "P0" to "P5616" from the memory 116.

Next, the threshold calculation unit 118 temporarily stores the read average powers "P0" to "P5616", calculates an average value of the stored average powers "P0" to "P5616", and calculates a threshold value by adding a predetermined offset value to the calculated average value. Here, the calculated threshold value is used in the subsequent interference determination unit 119 to determine whether or not each carrier has received interference. Note that the method described to calculate the threshold value is one example, and another method may be used.

After calculating the threshold value, the threshold calculation unit 118 outputs the read average powers "P0" to "P5616" and the calculated threshold value to the interference determination unit 119.

### (9) Interference determination unit 119

The interference determination unit 119 temporarily stores the average powers P0 to P5616 output by the threshold calculation unit 118, together with the corresponding carrier numbers. The interference determination unit 119 also temporarily stores the threshold value, and based thereon determines whether or not co-channel interference is occurring in the OFDM signal using the following procedure.

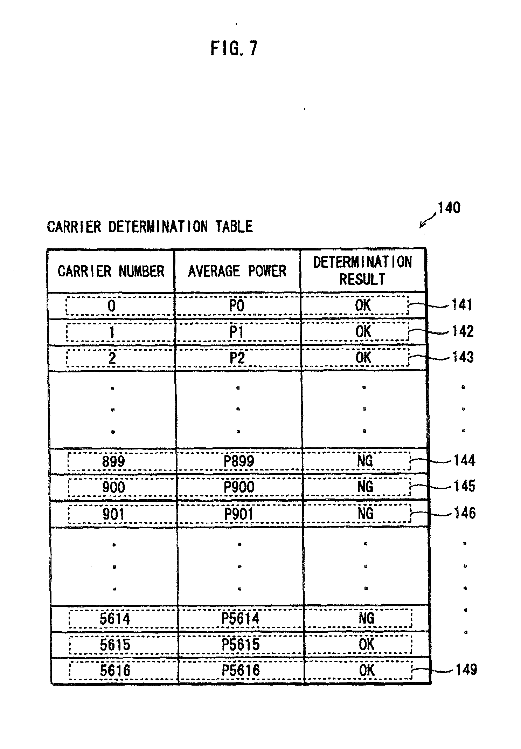

First, the interference determination unit 119 determines whether or not each of the carriers is receiving interference by comparing each of the average powers P0 to P5616 with the threshold value. The interference determination unit 119 determines that carriers that have a higher average power than the threshold value are receiving some kind of interference, and stores a determination result "NG" ("no good") for each such carrier. On the other hand, the interference determination unit 119 determines that carriers that have a lower average power than the threshold value are not receiving interference, and stores a determination result "OK" for each such carrier. FIG. 7 shows the structure of the information stored by the interference determination unit 119 at this time. As one example, the interference determination unit 119 stores a carrier determination table 140 in which carrier numbers, average powers and determination results are in correspondence. The carrier determination table 140 is composed of 5617 pieces of determination information 141, 142, 143,...149, each of which includes a carrier number, an average power of the carrier shown by the carrier number, and a determination result, and corresponds to the carrier shown by the carrier number.

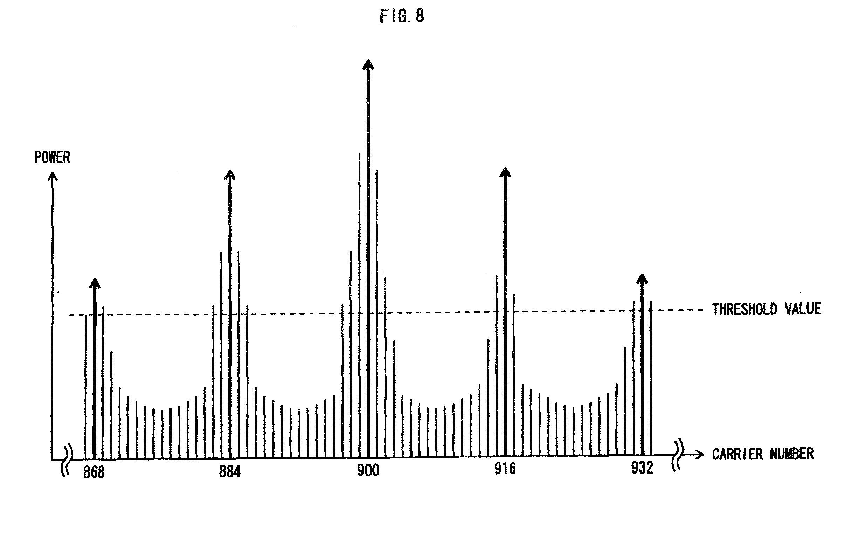

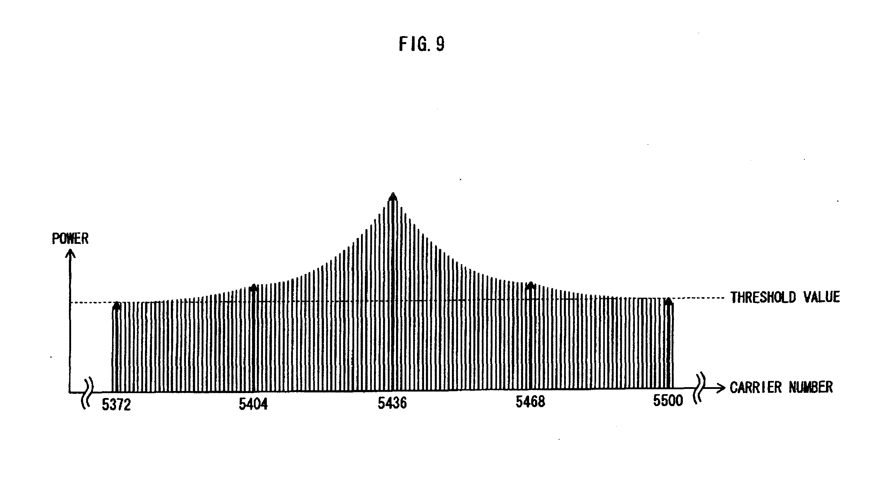

FIG. 8 and FIG. 9 show examples of the distribution of the average power of the carriers. In each figure, the horizontal axis expresses carrier numbers and the vertical axis expresses average power. The figures show the distribution of average power when co-channel interference occurs. The broken line in each of FIGs. 8 and 9 expresses the threshold value calculated by the threshold calculation unit 118. FIG. 8 shows an excerpt that is the part from carrier numbers 867 to 933, this part corresponding to the band in which the video signal of the analog broadcasting is distributed.

FIG. 9 shows an excerpt that is the part from carrier numbers 5403 to 5469, this part corresponding to the band in which the audio signal of the analog broadcasting is distributed.

As shown in FIG. 8 and FIG. 9, the average power is distributed such there are discrete locations where a local maximum power occurs. In particular, in the frequency band shown in FIG. 8, sharp peaks exist that have a local maximum value of the average power corresponding to carrier numbers 868, 884, 900, 916 and 932. This is because the video signal of the analog broadcasting has discrete peaks every 15.734264 kHz. Therefore, the determination result in the carrier determination information that include the carrier number 868, 884, 900, 916 and 932 and the carrier numbers in the vicinity thereof is "NG".

In the frequency band shown in FIG. 9 also, peaks exist that have a local maximum value of the average power corresponding to carrier numbers 5404, 5436 and 5468. However, the peaks shown in FIG. 9 are not so sharp, the overall tendency being that the average power becomes lower the further away the carrier is from the carrier having the maximum average power (carrier number 5463). This is due to the effect of the analog broadcasting audio signal which has peaks that are not so sharp at intervals of 31.468 kHz. Therefore, the determination result in the determination information corresponding to carriers around and including the carrier number 5436 is "NG".

The interference determination unit 119 selects the determination information whose determination result is "NG" from the carrier determination table 140. By comparing each of the average powers with the average powers of consecutive carrier numbers, the interference determination unit 119 is able to specify the carriers having the local maximum average power. For instance, the determination result in each of the determination information 144, 145 and 146 is "NG", and the carrier numbers are consecutive. The interference determination unit 119 compares the average powers in the determination information 144, 145 and 146, and since P899 ≤ P900 ≥ P901, determines that the carrier having the carrier number 900 is the carrier whose average power has the local maximum value. Using the same procedure, the interference determination unit 119 specifies the carriers whose average power has the local maximum value. Here, these specified carriers are called peak carriers, and the corresponding carrier numbers (hereinafter referred to as peak carrier numbers) are denoted as "C0", "C1", "C2",..."Cx" (0 ≤ x ≤ 5616, 0 ≤ C0, C1,...Cx ≤ 5616).

Next, the interference determination unit 119 searches the specified peak carrier numbers for peak carrier numbers "Cb" that satisfy 880 ≤ Cb ≤ 920 (0 ≤ b ≤ x). As described above, the peak of the analog broadcasting video signal has a frequency that is closest to the frequency of the carrier having the carrier number "900". Although the peak of the analog broadcasting video signal can be assumed to be included in the frequency band of carrier numbers 890 to 910 due to the possible offset of ±10 kHz, considering fluctuations in frequency due to effect on the transmission path, movement of the receiver 100 itself, and so on, strong interference in carriers from carrier numbers 980 to 920 is assumed to be likely to be interference caused by the analog broadcasting video signal in the present embodiment.

On detecting peak carrier numbers that satisfy 880 ≤ Cb ≤ 920, the interference determination unit 119 specifies the peak carrier number that has the maximum corresponding average power among the detected peak carrier numbers. The peak carrier number specified here is called "Cv" (0 ≤ v ≤ x).

Next, the interference determination unit 119 searches the peak carrier numbers for a carrier number "Ca" that satisfies Ca=Cv+4536 (0 < a ≤ x).

As described earlier, 4536 carriers of the OFDM signal exist between the video signal and audio signal of the analog broadcasting. Therefore, when a peak carrier number "Ca" that satisfies Ca=Cv+4536 exists, the interference determination unit 119 determines that co-channel interference is occurring. The peak carrier numbers "Cv" and "Ca" specified according to the described procedure are referred to as video peak carrier number "Cv" and audio peak carrier number "Ca", respectively. The peak carrier shown by the video peak carrier number "Cv" is the carrier that has been most greatly affected by the video signal of the analog broadcasting, and the peak carrier shown by the audio peak carrier number "Ca" is the carrier that has been most greatly affected by the audio signal of the analog broadcasting.

Next, the interference determination unit 119 outputs an occurrence signal showing that co-channel interference is occurring, and the video peak carrier number "Cv" and the audio peak carrier number "Ca" to the reliability output unit 121. The interference determination unit 119 then outputs the specified peak carrier numbers "C0", "C1", "C2",..."Cx" to the reliability output unit 121.

When a peak carrier number "Cv" that satisfies 880 ≤ Cv ≤ 920 does not exist among the specified peak carrier numbers, in other words, when a carrier strongly affected by interference does not exist among the carriers having the carrier numbers 880 to 920, the interference determination unit 119 determines that co-channel interference is not occurring. Furthermore, even if a peak carrier number "Cv" that satisfies 880 ≤ Cv ≤ 920 exists among the specified peak carrier numbers, if a peak carrier number "Ca" that satisfies Ca=Cv+4536 does not exist among the specified peak carrier numbers, the interference determination unit 119 determines that co-channel interference is not occurring.

When it is determined that co-channel interference is not occurring, the interference determination unit 119 outputs a non-occurrence signal showing that co-channel interference is not occurring, and the specifiedpeak carrier numbers "C0", "C1", "C2",..."Cx" to the reliability output unit 121.

### (10) Reliability output unit 121

The reliability output unit 121 pre-stores reliability information that is set for carriers in the frequency band that overlaps with the audio signal and the video signal of the analog broadcasting when co-channel interference occurs. Here, as one example, the reliability output unit 121 stores a first correspondence table and a second correspondence table (not shown), each of which has a similar structure to the carrier determination table 140 in FIG. 7, and is composed of carrier numbers and reliability information in correspondence. The first correspondence table is a table composed of reliability information set for the carriers of the frequency band that overlaps with the video signal of the analog broadcasting, and, in correspondence therewith, the carrier numbers of those carriers. The second correspondence table is a table composed of reliability information set for the carriers of the frequency band that overlaps with the audio signal of the analog broadcasting, and, in correspondence therewith, the carrier numbers of those carriers.

Here, the reliability information shows a reliability of the corresponding carrier, and has a value of 0, 1, 2 or 3. Since carriers that are strongly affected by interference have low reliability, the value of the reliability information therefor is low, whereas carriers that are not affected by interference have high reliability, and therefore the value of the reliability information therefor is high. Although the range of the value of the reliability information is described as being a range in which the value can be expressed with 2 bits in the present embodiment for brevity of explanation, ordinarily the range of the value of the reliability information is a range in which that value can be expressed with several bits.

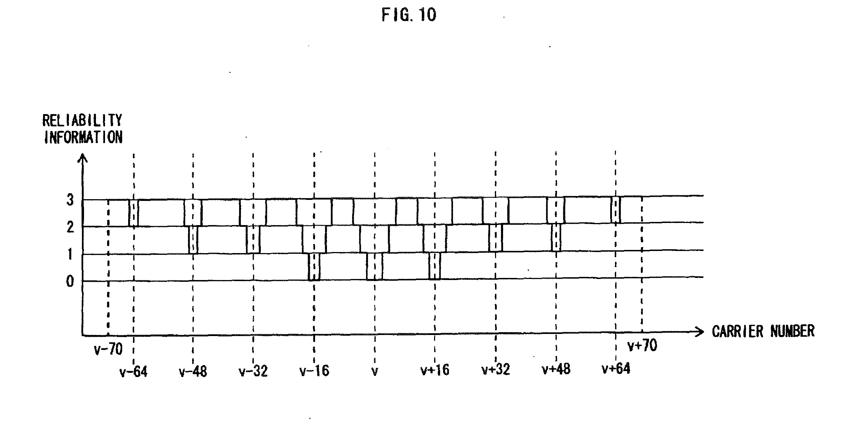

FIG. 10 shows the carrier numbers of the carriers and the reliability information in the first correspondence table stored by the reliability output unit 121. The carrier numbers in the first correspondence table are each a function of a variable v, the variable v being a variable that shows the carrier number of the carrier that is most greatly affected by the video signal of the analog broadcasting. As shown in FIG. 10, reliability information for carrier numbers v-70 to v+70 is included in the first correspondence table.

As was described using FIG. 2, approximately 16 carriers exist between the peaks of the video signal of the analog broadcasting. Therefore, as shown in FIG. 10, with respect to the carrier of the carrier number v and the carriers of the carrier numbers v±16×n (1 ≤ n ≤ 4), reliability information is set in accordance with the relative carrier position of the carrier to the carrier of the carrier number v. Specifically, reliability information "0" is set for the carriers of the carrier number v and the carriers of the carrier numbers v±16, reliability information "1" is set for the carriers of the carrier numbers v±32 and v±48, and reliability information "2" is set for the carriers of the carrier numbers v±64. Furthermore, with respect to the carriers in the vicinity of the carrier number v, the further the carrier position of the carrier is from the carrier of the carrier number v, the higher the value of the reliability information set for the carrier. Similarly, for carriers in the vicinity of the carrier number v±16×n (1 ≤ n ≤ 4), the further the carrier position of the carrier is from the carrier of the carrier number v±16×n (1 ≤ n ≤ 4), the higher the value of the reliability information set for the carrier.

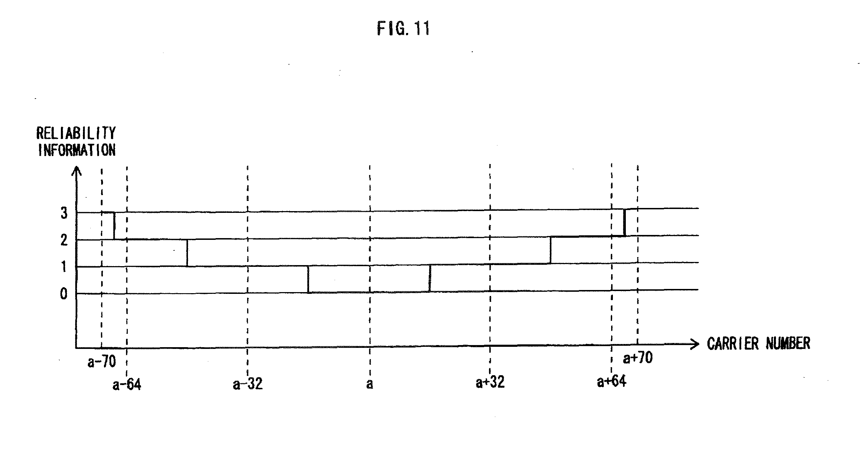

FIG. 11 shows the carrier numbers of the carriers and the reliability information in the second correspondence table stored by the reliability output unit 121. The carrier numbers in the second correspondence table are each a function of a variable a, the variable a being a variable that shows the carrier number of the carrier that is most greatly affected by the audio signal of the analog broadcasting. As shown in FIG. 11, reliability information for carrier numbers "a-70" to "a+70" is included in the second correspondence table.

As was described using FIG. 3, 32 carriers exist between the peaks of the audio signal of the analog broadcasting. The peaks are not so sharp, and overall the closer the carrier is to a peak having the greatest power, the more the carrier is affected by the audio signal. Therefore, reliability information "0"is set for the carriers in the carrier having the carrier number a and the carriers in the vicinity thereof, and the value of the reliability information increases incrementally, the further the carrier position of the carrier is from the carrier of the carrier number a.

When the interference determination unit 119 judges that co-channel interference is occurring, the reliability output unit 121 receives, from the interference determination unit 119, an occurrence signal showing that co-channel interference is occurring, and a video peak carrier number "Cv" and an audio carrier number "Ca", and also peak carrier numbers "C0", "C1", "C2",..."Cx" showing the specified peak carriers.

When interference determination unit 119 determines that co-channel interference is not occurring, the reliability output unit 121 receives, from the interference determination unit 119, a non-occurrence signal showing that co-channel interference is not occurring, and peak carrier numbers "C0", "C1", "C2",..."Cx" showing the specified peak carriers.

The following describes processing performed by the reliability output unit 121 in the cases of co-channel interference occurring and not occurring.

### (10-a) Co-channel interference occurrence

On receiving the occurrence signal, the video peak carrier signal number "Cv" and the audio peak carrier number "Ca", the reliability output unit 121 first sets reliability information for carriers in a range that is expected to be considerably affected by co-channel interference, specifically, the reliability output unit 121 substitutes the received video peak carrier number "Cv" in the variable v, and based on the first correspondence table that was described using FIG. 10, sets reliability information for the carriers of the carrier number "Cv-70" through to the carrier number "Cv+70".

Next, the reliability output unit 121 substitutes received audio peak carrier number "Ca" in the variable a, and based on the second correspondence table that was described using FIG. 11, sets reliability information for the carriers of the carrier number "Ca-70" through to the carrier number "Ca+70".

With the described procedure, the reliability output unit 121 first sets reliability information for carriers in the range that is expected to be considerably affected by co-channel interference, and then, with the following procedure, sets reliability information for carriers that are being affected by in-band interference.

First, the reliability output unit 121 receives the peak carrier numbers "C0", "C1", "C2", ... "Cx" from the interference determination unit 119. Peak carrier numbers that are not included in the range of carrier numbers "Cv-70" to "Cv+70" or carrier numbers "Ca-70" to "Ca+70" are assumed to show carriers in which in-band interference has been caused by interference other than the analog broadcasting. (Hereinafter, these peak carrier numbers are called in-band peak carrier numbers, and the corresponding carriers are called in-band peak carriers.)

There is a possibility that in-band interference is occurring in the range of carrier numbers "Cv-70" to "Cv+70" and carrier numbers "Ca-70" to "Ca+70". To this end, the reliability output unit 121 searches among the received peak carrier numbers for peak carrier numbers that are included in the range of carriers number "Cv-70" to "Cv+70" and whose difference with the video peak carrier number "Cv" is not a multiple of 16. In addition, the reliability output unit 121 searches among the received peak carrier numbers for peak carrier numbers that are included in the range of carriers number "Ca-70" to "Ca+70" and whose difference with the video peak carrier number "Cv" is not a multiple of 32. Here, the detected peak carrier numbers also show in-band peak carriers.

Next, the reliability output unit 121 sets reliability information having a low value for the carriers in the vicinity of the in-band peak carriers. Note that even though reliability information has already been set for the in-band peak carriers in the range of carrier numbers "Cv-70" to "Cv+70" or "Ca-70" to "Ca+70" and the carriers in the vicinity of these in-band peak carriers using the first and second correspondence tables, the reliability setting unit 121 uses the reliability information set here for the carriers in the vicinity of the in-band peak carriers.

The method used here to set the reliability information is arbitrary. For instance, the reliability information may be set to increase incrementally in value, the further the carrier position is from the in-band peak carrier.

Alternatively, the reliability information for the in-band peak carriers and the ±10 to 20 carriers in the vicinity thereof may be uniformly allocated reliability information "0". (Although the present embodiment assumes a case of ISDB-T Mode 3, in the case of Mode 2, it is sufficient for the number of carriers for which reliability information "0" is set to be approximately half of the stated number. In the case of Mode 1, it is sufficient for the number of carriers for which reliability information "0" to be approximately a quarter of the stated number.)

A further alternative is to determine the reliability information in consideration of the difference between a threshold value and an average power corresponding to the peak carriers.

Next, the interference determination unit 119 sets reliability information "3" for carrier numbers for which reliability information has not yet been set, in other words, for carriers that are receiving neither co-channel interference nor in-band interference.

When reliability information has been set for all the carriers in this way, the reliability output unit 121 outputs the carrier number of each carrier and the reliability information set for the carrier in correspondence to the de-mapping unit 109.

### (10-b) Absence of co-channel interference

The reliability output unit 121 receives the non-occurrence signal and the peak carrier numbers "C0", "C1", "C2",... "Cx" of the specified peak carriers. Since co-channel interference is not occurring in this case, the peak carrier numbers "C0", "C1", "C2",... "Cx" all show carriers in which in-band interference is occurring (Hereinafter, these peak carrier numbers are referred to as in-band peak carrier numbers, and the corresponding carriers are referred to as in-band peak carriers). The reliability output unit 121 sets reliability information having a low value for the in-band peak carriers and the carriers in the vicinity thereof. The method used to set the reliability information here is the same as the method described in (10-a) to set the reliability information for the carriers in the vicinity of the in-band peak carriers.

The reliability output unit 121 then sets reliability information "3" for carrier number for which reliability information has not yet been set, in other words, for carriers that are not receiving in-band interference.

Next, the reliability output unit 121 outputs the carrier number of each carrier and the reliability information set for the carrier in correspondence to the de-mapping unit 109.

Although not shown, before outputting to the de-mapping unit 109, the reliability output unit 121 frequency de-interleaves the reliability information corresponding to each carrier in accordance with the same rule as the frequency de-interleaving by the de-interleaving unit 108.

### (11) De-mapping unit 109, Viterbi decoding unit 111 and RS decoding unit 122

The de-mapping unit 109 de-maps the complex signals output by the de-interleaving unit 108 to generate corresponding bit data. The de-mapping unit 109 then lays the reliability information of each carrier output by the reliability output unit 121 out in a bit metric, and outputs the resultant data to the Viterbi decoding unit 111.

The Viterbi decoding unit 111 periodically receives bit data with reliability information attached thereto, and after bit de-interleaving the received bit data together with the reliability information, weights the bit data of each carrier based on the reliability in formation, to perform Viterbi decoding processing.

The RS decoding unit 122 receives the bit data that has been subject to Viterbi decoding by the Viterbi decoding unit 111, decodes Reed-Solomon codes, and outputs the resultant data to the TS decoding unit 123.

### (12) TS decoding unit 123 and MPEG decoding unit 124

The bit data output by the RS decoding unit 122 is composed of MPEG-2 (Moving Picture Experts Group phase 2) transport streams (hereinafter called "TS(s)").

The TS decoding unit 123 detects the PSI (program specific information) transport streams. Based on the detected PSI, the TS decoding unit 123 extracts the TS packets relating to the desired service, and after grouping the TS packets into video packets, audio packets, and PCR (program clock reference) packets, outputs the grouped TS packets to the MPEG decoding unit 124.

The MPEG decoding unit 124 is composed of an image decoder and a sound decoder. The image decoder extracts MPEG video data from the video packets output by the TS decoder 123, and decodes the extracted MPEG video data to generate image data. The sound decoder extracts MPEG audio data from the sound packets, and decodes the extracted MPEG audio data to generate sound data. While establishing synchronization based on the PCRs in the PCR packets, the MPEG decoding unit 124 outputs the image data and the sound data to the display device.

### 1.3 Operations

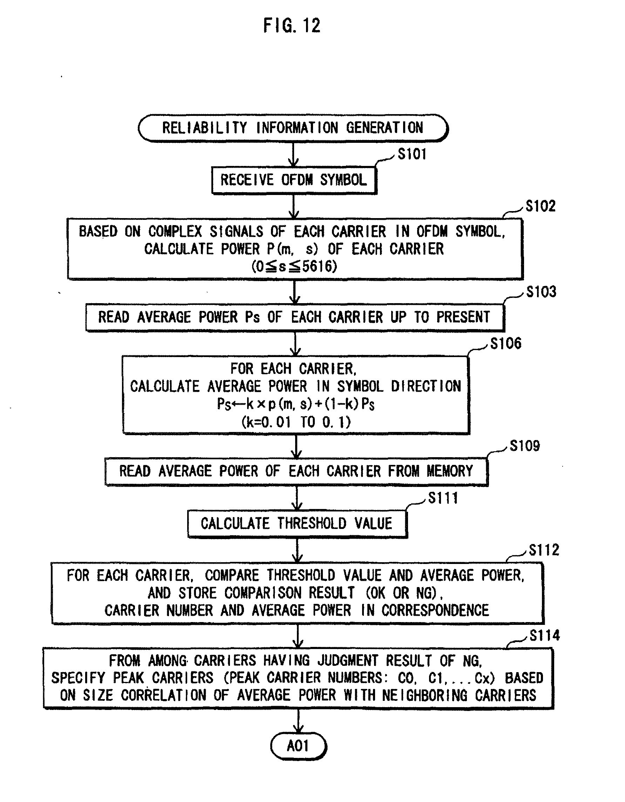

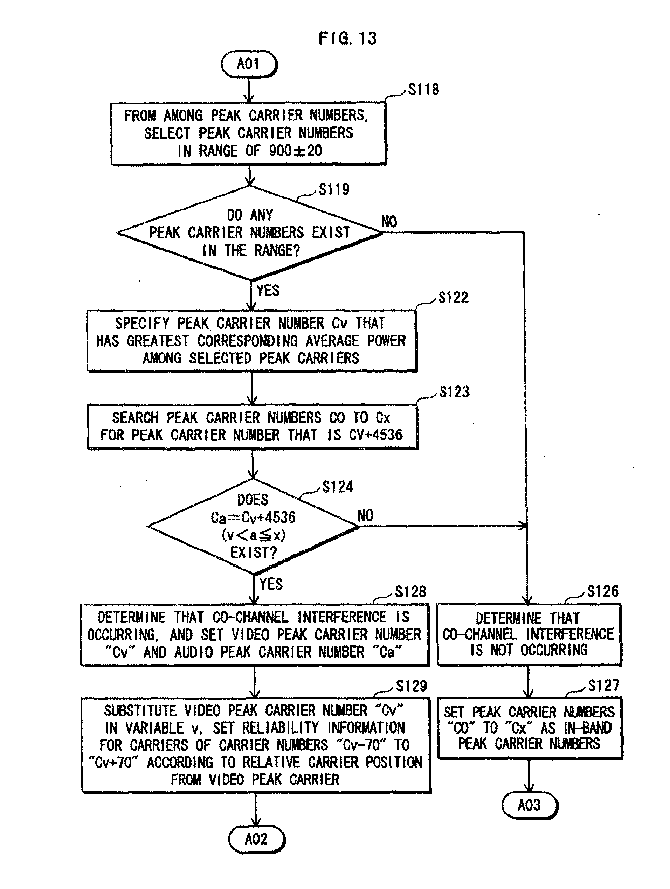

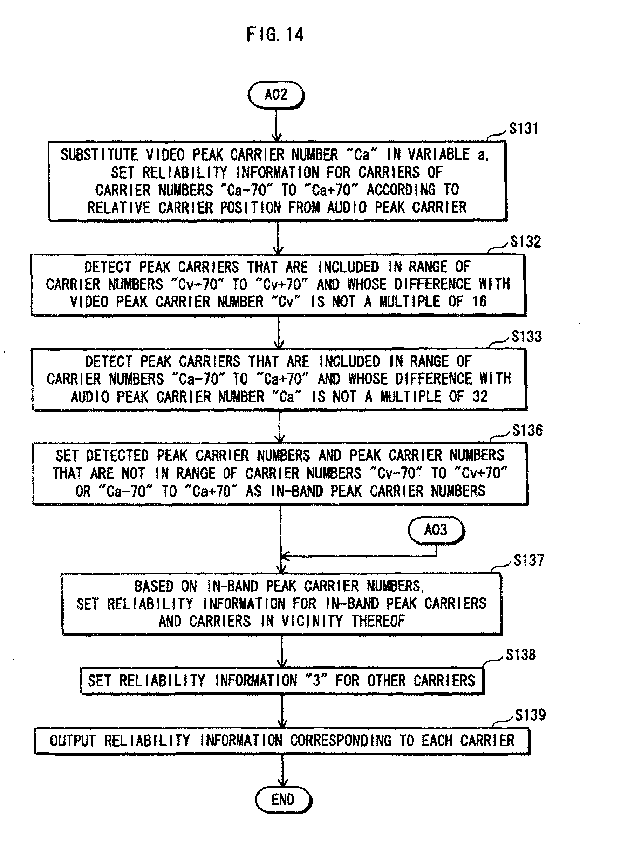

The following describes operations for setting the reliability information which is a feature of the present invention, with use of the flowcharts of FIGs. 12 to 14.

The power calculation unit 112 receives an OFDM symbol from the FFT processing unit 106 (step S101). On receiving the OFDM symbol, the power calculation unit 112 calculates the power p(m, s) of each carrier based on the complex signals (5616 in total) of each carrier included in the received OFDM symbol (step S102). Here, m is the symbol number and s is the carrier number. The power calculation unit 112 outputs the calculated powers p(m, s) to the adding unit 114.

The delay unit 117 reads the average power Ps of each carrier up to the present time from the memory 116, and outputs the read average powers Ps to the adding unit 114 (step S103).

Based on the power p(m, s) of each carrier output by the power calculation unit 112 and the average powers Ps output by the delay unit 117, the adding unit 114 calculates k×p(m,s)+(1-k)Ps for each carrier, and depending on the calculation result, updates the average power Ps stored for the carrier in the memory 116 (step S106).

Next, the threshold calculation unit 118 reads the average powers P0 to P5616 of the carriers from the memory 116 (step S109), and adds a predetermined offset to the average value of the read average powers P0 to P5616, to calculate a threshold value (step S111). The threshold calculation unit 118 then outputs the calculated threshold value and the average powers P0 to P5616 of the carriers read from the memory 116 to the interference determination unit 119.

The interference determination unit 119 temporarily stores the threshold value and the average powers of the carriers output by the threshold calculation unit 118. For each carrier, the interference determination unit 119 compares the average power of that carrier with the threshold value, and stores the carrier number, the average power and a comparison result (OK or NG) in correspondence (step S112). One example of this is the carrier determination table 140 shown in FIG. 7.

Next, the interference determination unit 119 selects carriers whose comparison result is NG, compares the average power of each selected carrier with the average power of carriers having neighboring carrier numbers, and in accordance with the correlation of the size of the compared average powers, specifies carriers that are peak carriers (peak carrier number: C0 to Cx, 0 ≤ x ≤ 5616, 0 ≤ C0, C1...Cx ≤ 5616) (step S114).

Next, the interference determination unit 119 selects peak carrier numbers in the range of 900±20, from among the peak carrier numbers (step S118). If no such peak carrier numbers exist here (NO at step S119), the processing moves to step S126.

If such peak carrier numbers exist (YES at step S119), the interference determination unit 119 specifies the peak carrier number "Cv" whose corresponding average power is the greatest among the peak carrier numbers selected at step S118 (step S122). Next, the interference determination unit 119 searches for the peak carrier number that corresponds to Cv+4536 among the peak carrier numbers C0, C1...Cx (step S123). When a peak carrier number "Ca" that satisfies Ca=Cv+4536 (v < a ≤ x) exists (YES at step S124), the interference determination unit 119 determines that co-channel interference is occurring, sets the video carrier number and the audio carrier number as "Cv" and "Ca" respectively, outputs an occurrence signal showing that co-channel interference is occurring and the video peak carrier number "Cv" and the audio peak carrier number "Ca" to the reliability output unit 121 (step S128).

The reliability output unit 121 receives the occurrence signal, the video peak carrier number "Cv" and the audio peak carrier number "Ca" from the interference determination unit 119. The reliability output unit 121 substitutes the video peak carrier number "Cv" in the variable v, and following the first correspondence table described using FIG. 10, sets reliability information for each carrier of carrier numbers "Cv-70" to "Cv+70" in accordance with the carrier position relative to the video peak carrier (step S129).

Next, the reliability output unit 121 substitutes the audio peak carrier number "Ca" in the variable a, and for each carrier of carrier numbers "Ca-70" to "Ca+70" that were described using FIG. 11 following the second correspondence table, sets reliability information in accordance with the carrier position relative to the audio peak carrier (step S131).

Next, the reliability output unit 121 detects peak carrier numbers that are included in the range of carrier numbers "Cv-70" to "Cv+70" and whose difference with the video peak carrier number "Cv" is not a multiple of 16 (step S132). The reliability output unit 121 also detects peak carrier numbers that are included in the range of carrier numbers "Ca-70" to "Ca+70" and whose difference with the audio peak carrier number "Ca" is not a multiple of 32 (step S133).

The reliability output unit 121 sets peak carrier numbers detected at step S132 and S133, and peak carrier numbers that are not included in the range of carrier number "Cv-70" to "Cv+70" or "Ca-70" to "Ca+70" as in-band peak carriers (step S136), and sets reliability information for the in-band peak carriers and the carriers in the vicinity thereof based on the in-band peak carrier numbers (step S137).

Next, the reliability output unit 121 sets reliability information "3" for other carriers, in other words, for carriers that have been affected by neither co-channel interference nor in-band interference (step S138).

At step S124, if a peak carrier number "Ca" that satisfies Ca-Cv+4536 (0 < a ≤ x) does not exist in the peak carrier numbers (NO at step S124), the interference determination unit 119 determines that co-channel interference is not occurring, and outputs a non-occurrence signal showing that co-channel interference is not occurring, and the peak carrier numbers "C0", "C1"..."Cx" to the reliability output unit 121 (step S126).

On receiving the non-occurrence signal and the peak carrier numbers "C0", "C1"... "Cx", and setting the received peak carrier numbers as in-band peak carrier numbers (step S127), the reliability output unit 121 moves to the processing at step S137.

When reliability information has been set for all carriers, the reliability output unit 121 outputs the carrier numbers of the carriers and the set reliability information in correspondence to the Viterbi decoding unit 111 (step S139).

### 1.4 Conclusion and Advantages

The described receiver 100 averages the power of each carrier in the symbol direction to calculate an average power of each carrier, and based on the calculated average powers and a threshold value, determines whether or not each carrier has been affected by interference. Since reception waves fluctuate significantly under a mobile reception environment, it is difficult to detect interference in only one symbol. By using average powers in the symbol direction as described to determine whether or not inference is occurring, the receiver 100 is capable of detecting interference accurately.

Furthermore, when the interference determination unit 119 determines that, among the carriers in which interference is occurring, a peak carrier whose power is a local maximum exists in vicinity of the frequency of the analog broadcasting video signal (carrier numbers 880 to 920) and that a peak carrier whose power is a local maximum exists in a carrier position that is 4536 carriers from the detected peak carrier (4.5 MHz in terms of frequency), the interference determination unit 119 determines that the interference is co-channel interference. Due to this basis of determination, the interference determination unit 119 is capable of detecting co-channel interference accurately.

When it is determined that co-channel interference is occurring, the reliability output unit 121 sets the reliability information in consideration of the frequency characteristics of the analog broadcasting as shown in FIG. 10 and 11, based on the video peak carrier and the audio peak carrier. This enables the reliability information of the carriers that are strongly affected by the analog broadcasting to be set reliably with a low value, and avoids the reliability information of carriers that are not significantly affected by the analog broadcasting being set lower than necessary.

Consequently, the receiver 100 of the present invention has the superior advantage of removing the effects of co-channel interference, while also preventing deterioration in reception performance at the time of demodulation.

Furthermore, reliability information is also set based on the carrier position relative to the in-band peak carrier for carriers receiving in-band interference. In other words, the reliability information of the carriers that are strongly affected by interference can be set reliably with a low value, and reliability information of the carriers that are relatively unaffected by interference can be set with a high value. Therefore, deterioration in reception performance can be prevented while eliminating the effects of interference.

### 2. Second Embodiment

The following describes a receiver 200 of a second embodiment of the present invention, with use of the drawings.

### 2.1 Structure of receiver 200

As with the receiver 100, the receiver 200 has a function of receiving and playing digital terrestrial broadcasting that complies with ISDB-T Mode 3, and is connected to a display device such as an LCD television.

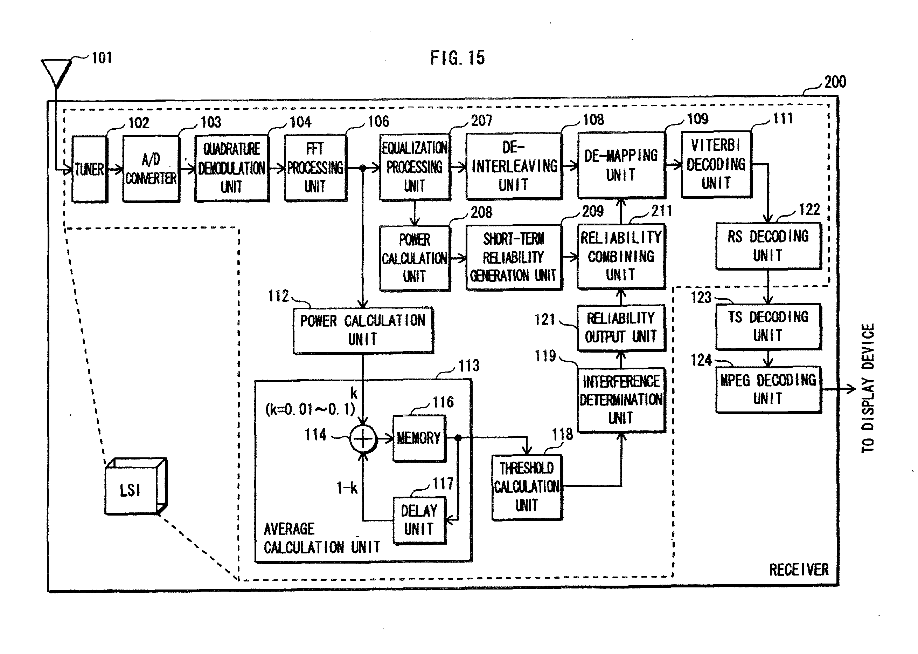

As shown in FIG. 15, the receiver 200 is composed of an antenna 101, a tuner 102, an A/D converter 103, a quadrature demodulation unit 104, an FFT processing unit 106, an equalization processing unit 207, a de-interleaving unit 108, a de-mapping unit 109, a Viterbi decoding unit 111, a power calculation unit 112, an average calculation unit 113, a threshold calculation unit 118, an interference determination unit 119, a reliability output unit 121, an RS decoding unit 122, a TS decoding unit 123, an MPEG decoding unit 124, a power calculation unit 208, a short-term reliability generation unit 209, and a reliability combination unit 211. Note that compositional elements of the receiver 200 that are the same as those of the receiver 100 of the first embodiment have the same numerical references as those in FIG. 5.

The tuner 102, the A/D converter 103, the quadrature demodulation unit 104, the FFT processing unit 106, the equalization processing 107, the de-interleaving unit 108, the de-mapping unit 109, the Viterbi decoding unit 111, the power calculation unit 112, the average calculation unit 113, the threshold calculation unit 118, the interference determination unit 119, the reliability output unit 121, the RS decoding unit 122, the power calculation unit 208, the short-term reliability generation unit 209 and the reliability combination unit 211 are circuits formed on a same one LSI.

The following describes the compositional elements of the receiver 200, however, descriptions of the antenna 101, the tuner 102, the A/D converter 103, the quadrature demodulation unit 104, the FFT processing unit 106, the de-interleaving unit 108, the de-mapping unit 109, the Viterbi decoding unit 111, the power calculation unit 112, the average calculation unit 113, the threshold calculation unit 118, the interference determination unit 119, the reliability output unit 121, the RS decoding unit 122, TS decoding unit 123 and the MPEG decoding unit 124 are omitted since they are the same as in the receiver 100 of the first embodiment.

### (1) Equalization processing unit 207

As with the equalization processing unit 107 in the first embodiment, the equalization processing unit 207 has a function of receiving an OFDM symbol, and compensating for the effects of distortion on the transmission path using the received OFDM symbol.

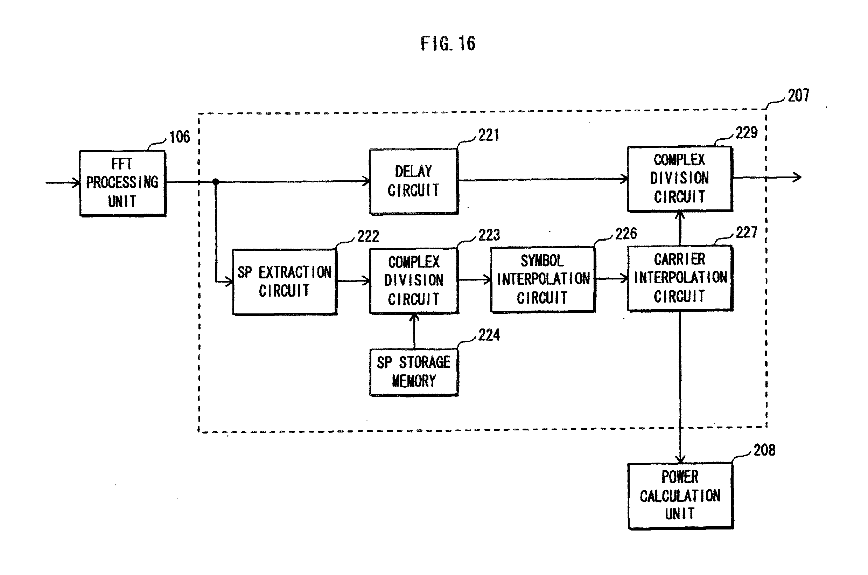

FIG. 16 is a block diagram showing the structure of the equalization processing unit 207. As shown in FIG. 16, the equalization processing unit 207 is composed of a delay circuit 221, an SP extraction circuit 222, a complex division circuit 223, an SP storage memory 224, a symbol interpolation circuit 226, a carrier interpolation circuit 227 and a complex division circuit 229.

The delay circuit 221 caches the OFDM symbols from the FFT processing unit 106 for a predetermined length of time, and then outputs the OFDM symbols to the complex division circuit 229.

The SP extraction circuit 222 extracts scattered pilot signals from the OFDM symbol output by the FFT processing unit 106, and outputs the scattered pilot signals to the complex division circuit 223.

The SP storage memory 224 stores internally signals that match the amplitude and phase of the SP signals of the carriers at the time of transmission (hereinafter referred to as known SP signal(s)), and outputs these known SP signals to the complex division circuit 223.

The complex division circuit 223 divides the SP signal output by the SP extraction circuit 222 with the known SP signal that, among the known SP signals output by the SP storage memory 224, corresponds to the carrier having the same carrier number as the SP signal. The complex division circuit 223 thus calculates the frequency response of the symbol locations and carrier position in the SP signal. The complex division circuit 223 then outputs the calculated frequency response in the symbol locations and carrier position to the symbol interpolation circuit 226. The complex division circuit 223 subjects each SP signal output by the SP extraction unit 222 to the same processing.

The symbol interpolation unit 226 interpolates (in the time axis direction) frequency response in symbol locations where SP signals on the carrier corresponding to the frequency response output by the complex division circuit 223 have not been transmitted, according to the frequency response output by the complex division circuit 223. The symbol interpolation circuit 226 subject all SP signals to this processing. As a result, the frequency response in each symbol location of the carrier that transmits the SP signal is generated. The symbol interpolation circuit 225 outputs the generated frequency response to the carrier interpolation circuit 227.

The carrier interpolation circuit 227 interpolates (in the frequency axis direction) the frequency response of carriers that do not includes SP signals, according to the frequency response output from the symbol interpolation circuit 226. Each one symbol period, the carrier interpolation circuit 227 outputs the generated frequency response corresponding to each carrier in each symbol period to the complex division circuit 229 and the power calculation unit 208.

The complex division circuit 229 equalizes the OFDM symbol by dividing each complex signal that composes the OFDM symbol output by the delay circuit 221 with the frequency response of the symbol location and the carrier position corresponding to each complex signal output by the carrier interpolation circuit 227, and outputs the resultant equalized OFDM symbols to the de-interleaving unit 108.

### (2) Power calculation unit 208

Based on the frequency response of each carrier for each symbol period output by the equalization processing unit 207, the power calculation unit 208 calculates the power of each carrier in the particular symbol period. Here, p(s) denotes power that is of a carrier having a carrier number s and that is calculated based on a frequency response. The power calculation unit 208 outputs the calculated powers p(0) to p(5616) to the short-term reliability generation unit 209.

### (3) Short-term reliability generation unit 209

The short-term reliability generation unit 209 calculates an average value of the powers p(0) to p(5616) of the carriers in one symbol period, applies a predetermined function α (0<α<<1) to the calculated average value, to calculate a first threshold value "Sα". Similarly, the short-term reliability generation unit 209 applies predetermined functions β and γ (0<α<β<γ<<1) respectively to the calculated average value to calculate a second threshold value "Sβ" and a third threshold value "Sγ".

The short-term reliability generation unit 209 compares the calculated first threshold value, second threshold value and third threshold value which each of the powers p(0) to p(5616). For carriers corresponding to P(s) that satisfies p(s)<Sα, the short-term reliability generation unit 209 sets reliability information "0". For carriers corresponding to p(s) that satisfy Sα ≤ p(s) < Sβ, the short-term reliability generation unit 209 sets reliability information "1". For carriers corresponding top(s) that satisfies Sβ ≤ p(s) < Sγ, theshort-term reliability generation unit 209 sets reliability information "2". For carriers corresponding to p(s) that satisfies Sγ ≤ p(s), the short-term reliability generation unit 209 sets reliability information "3".

The short-term reliability generation unit 209 outputs the reliability information set for each carrier in correspondence with the carrier number showing the carrier, to the reliability combination unit 211.

### (4) Reliability combination unit 211

The reliability combination unit 211 receives the carrier numbers and reliability information corresponding to each of the carrier numbers from the reliability output unit 121, and stores the received carrier numbers and reliability information in correspondence. Each time the reliability combination unit 211 newly receives carrier numbers and reliability information, it updates the stored carrier numbers and reliability information with the received carrier numbers and reliability information.

Every one symbol period, the reliability combination unit 211 also receives the carrier number of each carrier and reliability information corresponding to each carrier number from the short-term reliability generation unit 209.

On receiving the carrier number of each carrier and the reliability information corresponding to each carrier number from the short-term reliability generation unit 209, the reliability combining unit 211 compares the reliability information stored in correspondence with the carrier number "0" with the received reliability information corresponding to the carrier number "0", and selects the reliability information having the lower value.

Similarly, for each of the carrier numbers "2" to "5616", the reliability combining unit 211 compares the stored reliability information with the reliability information received from the short-term reliability setting unit 209, and selects the reliability information having the lower value.

After completing comparison and selection of reliability information for all carrier numbers, the reliability combining unit 211 outputs the carrier number of each carrier in correspondence with the selected reliability information to the Viterbi decoding unit 111.

### 2.2 Conclusion and Merits

As has been described, in the present embodiment the short-term reliability generation unit 209 sets reliability information for each carrier every one symbol period, setting the value of the reliability information lower, the lower the power of the carrier.

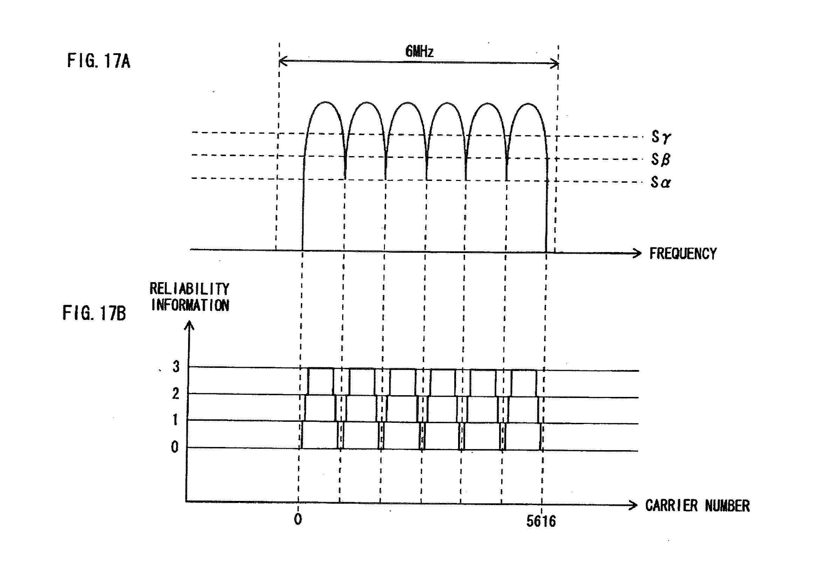

FIG. 17A shows frequency characteristics of an OFDM signal that has been affected by multipath interference. As shown in FIG. 17A, deep dips occur periodically if multipath interference is occurring. Errors occur concentrated in carriers in and around the dips.

In the present embodiment, the short-term reliability generation unit 209 sets the reliability information incrementally according to three stages of threshold values (0<Sα<Sβ<Sγ) that are sufficiently smaller than the average value of the power of each carrier. FIG. 17B shows the correspondence between the reliability information set by the short-term reliability generation unit 209 and the carrier numbers of the carriers, and also the relationship between the frequency characteristics of FIG. 17A and the reliability information. As shown in FIG. 17B, the carriers around the bottom of the dips have the lowest reliability information "0", and the reliability information becomes higher the further the carrier is from a dip. Note that since fluctuations in phase between direct waves and delayed waves occur over time, the frequency at which the dips occur varies constantly. For this reason, in the present embodiment the short-term reliability generation unit 209 generates appropriate reliability information every one symbol period.

The reliability combination unit 211 compares, for each carrier, the reliability information output by the reliability output unit 121 with the reliability information output by the short-term reliability generation unit 209, selects the reliability information having the lower value of the two, and outputs the selected reliability information to the Viterbi decoding unit 111.

As a result, the receiver 200 of the present embodiment removes not only the effects of external interference such as co-channel interference, but also the effects of dips caused by multipath interference.

### 3. Modification Examples

(1) Although the first and second embodiments are based on an assumption of application to television broadcasting in Japan, and are described based on ISDB-T digital television broadcasting and NTSC analog television broadcasting, the present invention is not limited to such systems.

For instance, the present invention may be applied to PAL (phase alternation by line) analog television broadcasting which is used in Europe and other regions, and DVB-T (digital video broadcasting terrestrial) digital terrestrial broadcasting. In PAL, the horizontal synchronization frequency is 15.625 kHz, and in DVB-T 8K mode, the carrier interval is 1.116 kHz. Therefore, since 15.625 kHz/1.116 kHz = 14.0089..., approximately 14 carriers exist between the peaks of the analog broadcasting video signal. If the present invention is to be applied to the stated systems, when co-channel interference occurs the reliability output unit 121 sets low reliability information for carriers that have carrier numbers that are multiples of 14 from the video peak carrier number.

Note that caution is required in the case of PAL because parameters such as the frequency of the video signal and audio signal, the frequency band per channel and the offset vary depending on the mode (2K, 4K, 8K) and country.

(2) In the first and second embodiments, the threshold calculation unit 118 adds an offset to the average value of the average powers P(0) to P(5616) of the carriers, to calculate a threshold value. However, the threshold value is not limited to being calculated in this way.

For instance, a threshold value may be calculated for each carrier. Specifically, a threshold value for a carrier having a carrier number "s" is generated by adding a predetermined offset to an average value of P(s-50) to P(s+50). Note thatwhen s-50<0, an offset is added to the average value of P(0) to P(s+50) to generate the threshold value, and when s+50>5616, an offset is added to the average value of P(s-50) to P(5616) to calculate the threshold value.

Although the frequency characteristics of the OFDM signal are shown as being flat in FIG. 1, there are cases when, depending on the reception state, the OFDM signal may slant. This means that carriers that are not affected by interference may be determined to be "NG" if the same threshold value is used for all carriers. Calculating a threshold value for each carrier as described above avoid erroneous determination results.

(3) In the first and second embodiments, the interference determination unit 119 determines that co-channel interference is occurring when a peak carrier exists in a carrier position 4536 carriers from the video peak carrier. However, this determination is not limited to being made on this basis.

For instance, the interference determination unit 119 may determine that co-channel interference is occurring if at least a predetermined number of peak carrier numbers that satisfy Cv±16n (n being a natural number) exist in the peak carrier numbers "C0", "C1",..."Cx". Since an analog broadcasting video signal has a sharp peak approximately every 16 carriers, it is thought that if peak carriers exist every 16 carriers in the vicinity of the analog broadcasting video signal, there is a high possibility that interference from the analog broadcasting video signal is occurring.

Since the power of the audio signal is weak compared to the power of the video signal in analog broadcasting, there are cases in which no carriers for which a determination of "NG" is given will be detected around the analog broadcasting audio signal when the level of interference is low. However, the stated method is capable of detecting co-channel interference highly accurately, even if the level of interference is low.

(4) As a further alternative, co-channel interference may be determined to be occurring if a peak carrier exists between carrier numbers 880 to 920.

Since the power of the audio signal of an analog television broadcast is generally weaker than a the power of the video signal, even if co-channel interference is occurring, it is possible that the effects of interference on carriers in the vicinity of the audio signal will not be detected if the level of interference is low.

While employment of the above-described method of determination leads to lower accuracy in determination, it is effective if the level of interference is low or when a simple circuit structure is desired for the interference determination unit 119.

(5) In the first and second embodiments, the reliability output unit 121 pre-stores the first correspondence table and the second correspondence table. However, the reliability output unit 121 may instead store functions and parameters, and calculate the reliability information to set for each carrier based on the functions of the video peak carrier numbers and the audio peak carrier numbers.

(6) Although not shown in FIG. 1, a color subcarrier exists between the video signal and the audio signal in the analog television broadcast.

Although the interference determination unit 119 refers to the average power of carriers in the vicinity of the video signal and the audio signal to determine whether or not co-channel interference is occurring, carriers in the vicinity of the color subcarrier may be used.

Furthermore, when it is determined that co-channel interference is occurring, the reliability output unit 121 may set the reliability information for the carriers in the vicinity of the color subcarrier according to the frequency characteristics of the color subcarrier, in the same way as for the carriers in the vicinity of the video signal and the audio signal.

(7) In the second embodiment the power calculation unit 208 calculates the power of the carriers based on the frequency responses of the carriers output by the carrier interpolation circuit 227 in the equalization processing unit 207. However, the power calculation unit 208 may instead use a signal output by the complex division circuit 229.

Furthermore, it is possible to omit the power calculation circuit 208 from the receiver 200, and have the short-term reliability generation unit 209 set the reliability information based on the power of the carriers output by the power calculation unit 122.

(8) In the first and second embodiments, the interference determination unit 119 determines that a carrier is being affected by some kind of interference, and gives a determination result of "NG", if the average power of the wave is equal to or greater than the threshold value. However, the interference determination unit 119 may instead give a determination result of "NG" if a difference with average powers of neighboring carriers exceeds a predetermined threshold value.

Since the phase of multipath changes constantly in mobile communication, if the power of carriers is averaged in the time direction, the average power of carriers that are not being affected by interference will be substantially equal, while the average power of carriers that are being affected by interference will be outstandingly high. However, if for reasons such as the broadcast receiver being stationary, the phase difference between delayed waves and direct wave does not fluctuate, a periodical gap such as shown in FIG. 17A will occur even if the average value is calculated in the time direction. There is a danger in this case that if the method of the first embodiment is used to calculate the threshold value, the threshold value will be low due to the effect of the carriers in the vicinity of the dips, and carriers that are not being affected by interference will be erroneously given a determination result of "NG".

If the determination is made according to the difference with the average power of neighboring carriers as in the present modification example, the average power will fluctuate dramatically in carriers that are being affected by interference and carriers in the vicinity of the dips. This enables determinations of "NG" to be made more reliably. On the other hand, since the average power is smooth in the parts where the power is a local maximum between dips, a determination of "NG" is unlikely to be given for carriers in these parts.

Therefore, the present modification example reduces the possibility of normal carriers being determined to be "NG".

(9) In the first and second embodiments, the average calculation unit 113 calculates the average power for each carrier in the symbol direction and the threshold calculation unit 118 and the interference determination unit 119 calculate the threshold value and whether interference is occurring based on the calculated average powers P(0) to P(5616). However, instead of average powers, a total value of power over a predetermined period (for examples, 1000 symbol periods) may be used.

(10) All or part of the compositional elements of each apparatus may be composed from one system LSI. The system LSI is a super-multifunctional LSI on which a plurality of compositional units are manufactured integrated on one chip, and is specifically a computer system that includes a microprocessor, a ROM, a RAM, and the like. Computer programs are stored in the RAM. The LSI achieves its functions by the microprocessor operating according to the computer programs.

(11) The present invention may be methods shown by the above. Furthermore, the methods may be a computer program realized by a computer, and may be a digital signal expressing the computer program.

Furthermore, the present invention may be a computer-readable recording medium such as a flexible disk, a hard disk, a CD-ROM (compact disk-read only memory), an MO (magneto-optical), a DVD (digital versatile disk), a DVD-ROM (digital versatile disk-read only memory), a DVD-RAM (digital versatile disk-random access memory), a BD (Blu-ray Disc) or a semiconductor memory, that stores the computer program or the digital signal. Furthermore, the present invention may be the computer program or the digital signal recorded in any of the aforementioned recording media.

(12) The present invention may be any combination of the above-described embodiment and modifications.

Although the present invention has been fully described by way of examples with reference to the accompanying drawings, it is to be noted that various changes and modification will be apparent to those skilled in the art. Therefore, unless otherwise such changes and modifications depart from the scope of the present invention, they should be construed as being included therein.

### Industrial Applicability

The present invention can be used managerially and continuously in an industry that manufactures and sells electronic devices that receive signals that conform with an OFDM method, and in an industry that uses such electronic devices.

## Claims

1. An OFDM (Orthogonal Frequency Division Multiplexing) receiver for receiving an OFDM signal, the OFDM receiver comprising:
an FFT (Fast Fourier Transform) circuit (106) operable to apply FFT processing to the received OFDM signal;
a power calculation unit (112) operable to calculate a reception power of each of carriers in a signal obtained as a result of the FFT processing;
a first average calculation unit (113) operable to, for each carrier, calculate an average power that is an average in a symbol direction of the reception power calculated for the carrier;
a second average calculation unit (118) operable to calculate an average power of all carriers that is an average in a frequency direction of the average powers calculated for each carrier by the first average calculation unit;
a threshold generation unit (118) operable to generate a threshold value based on the average power of all carriers calculated by the second average calculation unit;
an interference detection unit (119) operable to, for each carrier, compare the average power of the carrier calculated by the first average calculation unit with the threshold value, and when the average power of the carrier is greater than the threshold value, detect the carrier as a carrier that is receiving interference; and
a reliability level setting unit (121) operable to, when a carrier is detected as receiving interference, set for the interference carrier a reliability level that is lower than a reliability level of carriers not detected as receiving interference.

2. The OFDM receiver of claim 1, wherein the reliability level setting unit includes:
a determination sub-unit operable to determine whether or not each carrier detected as receiving interference is receiving interference due to an effect of an analog broadcast that uses a same channel thereas; and
an allocation sub-unit operable to, when a determination result by the determination sub-unit is affirmative, allocate a reliability level to each carrier in accordance with a spectrum characteristic of a signal of the analog broadcast.

3. The OFDM receiver of claim 2, wherein
the determination sub-unit determines that a carrier detected as receiving interference is receiving interference due to the effect of the analog broadcast when the carrier detected as receiving interference is detected at a frequency that is within predetermined range of a frequency of a video carrier wave of the analog broadcast.

4. The OFDM receiver of claim 2, wherein
the determination sub-unit calculates a frequency difference between, from among carriers detected as receiving interference by the interference detection unit, (i) a first interference carrier that corresponds to a greatest one of the average values, and (ii) a second interference carrier that corresponds to a second greatest one of the average values, and determines that a carrier receiving interference due to the effect of the analog broadcast when the calculated difference is substantially equal to a difference between a frequency of a video signal carrier wave and a frequency of a color subcarrier of the analog broadcast.

5. The OFDM receiver of claim 2, wherein
the allocation sub-unit allocates a lowest reliability level to a peak interference carrier having substantially a same frequency as a video signal carrier wave of the analog broadcast, allocates a higher reliability level than the reliability level of the peak interference carrier to a first type carrier whose frequency difference with the peak interference carrier is an integral multiple of a horizontal synchronization signal frequency, and allocates a higher reliability level than the reliability level than the reliability level of the first type carrier to second type carrier whose frequency difference with the peak interference carrier is an odd multiple of half the horizontal synchronization signal frequency.

6. The OFDM receiver of claim 2, wherein
the allocation sub-unit allocates a lowest reliability level to a peak interference carrier having substantially a same frequency as an audio broadcast wave of the analog broadcast, and for carriers within a range of ± 4 times the horizontal synchronization signal frequency of the peak interference carrier, sets a higher reliability level than the lowest reliability level, in accordance with a frequency difference with a peak carrier.

7. A receiving method used in an OFDM (Orthogonal Frequency Division Multiplexing) receiver for receiving an OFDM signal, the receiving method comprising:
an FFT (Fast Fourier Transform) step of applying FFT processing to the received OFDM signal;
a power calculation step of calculating a reception power of each of carriers in a signal obtained as a result of the FFT processing;
a first average calculation step of, for each carrier, calculating an average power that is an average in a symbol direction of the reception power calculated for the carrier;
a second average calculation step of calculating an average power of all carriers that is an average in a frequency direction of the average powers calculated for each carrier by the first average calculation step;
a threshold generation step of generating a threshold value based on the average power of all carriers calculated by the second average calculation step;
an interference detection step of, for each carrier, comparing the average power of the carrier calculated by the first average calculation step with the threshold value, and when the average power of the carrier is greater than the threshold value, detect the carrier as a carrier that is receiving interference; and
a reliability level setting step of, when a carrier is detected as receiving interference, setting for the interference carrier a reliability level that is lower than a reliability level of carriers not detected as an interference carrier.

8. An integrated circuit which is an OFDM (Orthogonal Frequency Division Multiplexing) receiver as defined in claims 1-6 for receiving an OFDM signal is mounted in an OFDM transmitting and receiving apparatus.
